# EUROPEAN PATENT SPECIFICATION

(11) **EP 4 155 073 B1**
(45) Date of publication and mention of the grant of the patent: **17.09.2025**
(21) Application number: 22197629.3
(22) Date of filing: 26.09.2022
(51) Int. Cl.: B32B 7/12, B32B 27/08, B32B 27/32, B32B 27/36, B32B 7/05

(54) **MULTILAYER FILM HAVING GAS-BARRIER PROPERTIES FOR CONTAINERS, METHOD FOR ITS PRODUCTION AND CONTAINER INCLUDING THIS FILM**
MEHRSCHICHTIGER FILM MIT GASBARRIEREEIGENSCHAFTEN FÜR BEHÄLTER, VERFAHREN ZU SEINER HERSTELLUNG UND BEHÄLTER MIT DIESEM FILM
FILM MULTICOUCHE AYANT DES PROPRIÉTÉS DE BARRIÈRE AUX GAZ POUR RÉCIPIENTS, PROCÉDÉ POUR SA PRODUCTION ET RÉCIPIENT COMPRENANT CE FILM

(30) Priority: 27.09.2021 IT 202100024632
(43) Date of publication of application: 29.03.2023
(73) Proprietor: Flex Packaging Al S.p.A., 84013 Cava de' Tirreni (SA) (IT)
(72) Inventor: AVOLIO, Roberto, 80021 Afragola (NA) (IT); CARFAGNA, Cosimo, 86082 Capracotta (IS) (IT); CASTALDO, Rachele, 80023 Caivano (NA) (IT); COCCA, Mariacristina, 84087 Sarno (SA) (IT); ERRICO, Maria Emanuela, 80129 Napoli (IT); GALDI, Maria Rosaria, 84126 Salerno (IT); GENTILE, Gennaro, 84013 Cava de' Tirreni (SA) (IT); SENATORE, Valentina, 84013 Cava de' Tirreni (SA) (IT)
(74) Representative: Botti & Ferrari S.p.A.

(56) References cited:
- EP-A1- 3 375 811
- EP-A1- 3 812 148
- WO-A1-2016/183204

## Description

### Field of application

In its more general aspect, the present invention relates to a multilayer film having gas-barrier properties for containers suitable for the packaging of products of various type, preferably but not exclusively food or pharmaceutic products.

In particular, the present invention relates to a multilayer film having gas-barrier properties comprising a first layer and a second layer made of a thermoplastic material coupled to each other and a layer having gas-barrier properties between said first layer and said second layer wherein the layer having gas-barrier properties comprises graphene and/or a derivative thereof, for instance graphene oxide, and coats a coupling surface of at least one of the first layer and the second layer in a discontinuous manner.

The present invention also relates to a method for producing a multilayer film having gas-barrier properties as defined above, as well as to a container or a package comprising said multilayer film.

### Prior art

Multilayer films made of made of plastic material and having gas and humidity-barrier properties are well known in the art. Said multilayer films are widely used to make containers or packages for packaging products of various type, in particular food or pharmaceutic products, which need protection against oxygen and humidity, so as to be able to be stored for a relatively long period.

The known multilayer films generally comprise a first layer and a second layer, both made of a thermoplastic material, per se not having gas-barrier properties, for instance made of polyethylene (PE), polypropylene (PP) or polyethylene terephthalate (PET), between which a layer made of a material having gas-barrier properties is interposed. The first layer and the second layer made of a thermoplastic material and the gas-barrier layer are usually coupled to each other by lamination after interposition of an adhesive.

The layer having gas-barrier properties may be made of several materials depending on the desired features for the multilayer film in terms of gas-barrier and/or other physical features such as, for instance, of mechanical strength and depending on the application which the multilayer film is intended for.

For instance, in some prior art embodiments, the material forming the gas-barrier layer may be made of an aluminium sheet, a gas-barrier polymeric material such as polyamide (PA) or ethylene vinyl alcohol (EVOH) or an oxide such as aluminium oxide (AlOx) and silicon oxide (SiOx), or a metal (for instance aluminium) which coats the coupling surface of the first layer or of the second layer and is applied onto said surface so as to form a gas-barrier continuous layer by conventional vacuum techniques such as reactive-vapor deposition or plasma deposition.

However, prior art multilayer films as above discussed have drawbacks.

Indeed, it should be noted that multilayer films containing an aluminum sheet as gas-barrier layer have the drawback that the thickness of the aluminum sheet is usually relatively high, and this may make the multilayer film containing it too thick, in addition to significantly increase the production costs of the multilayer film and of the containers obtained therewith. Moreover, the use of an aluminum sheet or of a metal coating as gas-barrier layer compromises the transparency of the containers obtained from gas-barrier multilayer films containing it.

Multilayer films containing a layer of gas-barrier polymeric material instead usually imply lower production costs but are difficult to be recycled after use, as well as the containers obtained therewith.

Multilayer films containing an oxide internal coating as gas-barrier on the other hand, are often difficult to make due to the complexity and laboriousness of the deposition techniques used. Moreover, said coating is usually not very flexible and thus subjected to the formation of cracks or fissures during the use of the multilayer film, which leads to the creation of preferential paths for the passage of gas that reduce or compromise the gas-barrier properties of the containers formed with said multilayer films.

More recently, gas-barrier multilayer films have been provided in which the gas-barrier properties are obtained by the use of graphene or a derivative thereof (for instance graphene oxide) as a coating on the coupling surface of at least one layer of polymeric material of the multilayer film so as to form a gas-barrier continuous layer on said surface. Multilayer films as above are described for instance in patent application no. WO 2015/183039.

WO 2016/183204 discloses a layered composition comprising at least three layers, wherein at least one of the layers comprises a nonwoven composite material including a graphene component and a polymer component, which may be a polyolefin selected from polypropylene or polyethylene. The layered composition comprises a middle film layer, e.g., a microporous film, and two outer nonwoven outer fabric layers, wherein at least one of the layers comprises all or a portion of the nonwoven composite composition.

EP 3 375 811 A1 discloses a multifunctional diffusion barrier comprising at least an organic polymer and 0.01-99.9% by weight of a 2D graphene or 2D graphene derivative material, wherein the outermost surface of the multifunctional barrier is patterned.

EP3812148 A1 discloses a retort food packaging film configured in this order: a sealant layer; a first adhesive layer; a core layer; second adhesive layer and a surface layer, wherein least one layer from the sealant layer, the first adhesive layer, the second adhesive layer, and the surface layer includes graphene. The graphene increases the durability of the retort food packaging film and reduce gas permeability and moisture permeability thereof.

Though multilayer films of this type are mostly satisfactory in relation to the gas-barrier features and can be recycled after use, sometimes they can have insufficient adhesion between the layers, which may lead to their separation (delamination of the structure).

Multilayer films are also known in which the gas-barrier properties are obtained by the use of graphene or of a derivative thereof (for instance graphene oxide) introduced in bulk as particles into the polymeric material forming one or more layers of the multilayer film. Multilayer films as above are described for instance in patent publication KR 101450963.

However, the gas-barrier properties of a multilayer film of this type are not always satisfactory for the applications they are intended for.

Therefore, the main purpose of the present invention is to provide a multilayer film with a gas-barrier layer comprising graphene or a derivative thereof which has, in use, proper/good gas-barrier characteristics, in particular oxygen-barrier characteristics, and meanwhile ensures a better adhesion between the layers so as to prevent the separation over time without the previously cited drawbacks with reference to the prior art.

Another purpose of the present invention is to provide a gas-barrier film as above which is recyclable after use.

A further purpose of the present invention is to provide a method for producing a multilayer film as above and a container or package comprising said multilayer film which are simple and cheap to be made.

### Summary of the invention

These and other purposes are primarily attained by a multilayer film having gas-barrier properties comprising a first layer and a second layer made of a plastic material, preferably thermoplastic, coupled to each other and at least one layer having gas-barrier properties between said first layer and said second layer wherein the at least one layer having gas-barrier properties comprises graphene and/or a derivative thereof and coats a coupling surface of at least one of the first layer and the second layer in a discontinuous manner and wherein said first layer and said second layer made of plastic material have each a thickness comprised in the range from 5 µm to 100 µm.

In an embodiment, the at least one discontinuous layer having gas-barrier properties coats at least 70%, in particular between 70% and 90%, of the coupling surface of at least one of the first layer and the second layer. In this way, for the multilayer film according to the invention an increase greater than 50% of the gas-barrier is obtained with respect to an analogous multilayer film without gas-barrier coating.

In another embodiment, the at least one discontinuous layer having gas-barrier properties coats between 90% and 99.8% of the coupling surface of at least one of the first layer and the second layer. In this way, for the multilayer film according to the invention an increase greater than 85% of the gas-barrier is obtained with respect to an analogous multilayer film without gas-barrier coating.

In an embodiment, the multilayer film according to the invention comprises a first gas-barrier layer comprising graphene and/or a derivative thereof which coats the coupling surface of said first layer in a discontinuous manner and an adhesive arranged between the first gas-barrier discontinuous layer and the second layer made of plastic material, said first layer made of plastic material carrying the first gas-barrier discontinuous coating layer and said second layer made of plastic material being coupled to each other by said adhesive.

In another embodiment, the multilayer film according to the invention comprises a first gas-barrier layer comprising graphene and/or a derivative thereof which coats the coupling surface of said first layer made of plastic material in a discontinuous manner, a second gas-barrier layer comprising graphene and/or a derivative thereof which coats the coupling surface of said second layer made of plastic material in a discontinuous manner and an adhesive arranged between the first gas-barrier layer and the second gas-barrier layer, said first layer made of plastic material carrying the first gas-barrier discontinuous coating layer and said second layer made of plastic material carrying the second discontinuous coating layer being coupled to each other by said adhesive.

In an embodiment, the layer or the first gas-barrier layer which coats the coupling surface of said first layer made of plastic material in a discontinuous manner and/or the second gas-barrier layer which coats the coupling surface of the second layer made of plastic material in a discontinuous manner comprises graphene and/or a derivative thereof and a clay, in particular at least one phyllosilicate such as montmorillonite or cloisite, and/or a hydrotalcite.

Preferably, the graphene derivative consists of graphene oxide (GO).

In the above-described embodiments, the first layer made of plastic material and the second layer made of plastic material are coupled to each other by lamination by said adhesive.

The above purposes are also attained by a method for producing a multilayer film as above described.

In an embodiment, said method comprises the steps of:
- forming a first layer and a second layer made of plastic material,
- forming a first gas-barrier discontinuous coating layer on a coupling surface of said first layer made of plastic material, said first discontinuous coating layer comprising graphene and/or a derivative thereof and optionally at least one phyllosilicate and/or one hydrotalcite;
- optionally forming a second gas-barrier discontinuous coating layer on a coupling surface of said second layer made of plastic material, said second discontinuous coating layer comprising graphene and/or a derivative thereof and optionally at least one phyllosilicate and/or one hydrotalcite;
- coupling said first layer made of plastic material carrying said first discontinuous coating layer with said second layer made of plastic material possibly carrying said second discontinuous coating layer so as to arrange said first discontinuous coating layer and said second discontinuous coating layer, if present, between said first layer and said second layer made of plastic material.

In an embodiment, the step of forming the layer or the first gas-barrier coating layer on the coupling surface of the first layer made of plastic material and/or the step of forming the second gas-barrier coating layer on the coupling surface of the second layer made of thermoplastic material may be carried out by spraying or deposition starting from a suitable composition comprising graphene and/or a derivative thereof or by using other similar or functionally equivalent techniques known in the art.

In an embodiment, the step of coupling the first layer made of plastic material carrying said first discontinuous coating layer with said second layer made of plastic material possibly carrying the second discontinuous coating layer comprises:
- applying an adhesive, for instance an adhesive layer, onto said first discontinuous coating layer and/or onto the coupling surface of said second layer made of plastic material or onto the second discontinuous coating layer if present, and
- laminating said first layer made of plastic material with said second layer made of plastic material.

The above purposes are also attained by a container or a package comprising a gas-barrier multilayer film as above described.

The container or package according to the invention preferably have gas-barrier properties, in particular oxygen, and may be of any type, shape, and/or size suitable for the packaging of the desired products, in particular food or pharmaceutic products.

For instance, the container according to the invention may be of the flexible type, such as a pouch, and may be directly obtained from a sheet of multilayer film according to the invention by folding the same and welding the opposite side and upper edges and possible formation of a bellows-lower portion during the folding, so as to make the container self-standing.

Alternatively, the container may be of the rigid type, for instance of the type comprising a base and a cover or closing film and comprising a multilayer film according to the invention in the base and/or in the cover so as to give the container the desired gas-barrier properties.

Further features and advantages of the present invention will become more apparent from the following description which is given by way of indicative and non-limiting example also with reference to the appended drawings.

### Brief description of the drawings

In the attached drawings:
- Figure 1 shows a sectional schematic view of a gas-barrier multilayer film according to an embodiment of the invention;
- Figure 2 shows a sectional schematic view of a gas-barrier multilayer film according to another embodiment of the invention;
- Figures 3 and 4 each show an image of a multilayer film made of PE according to the invention with a respective arrangement of a single gas-barrier layer in parallel stripes;
- Figures 5 and 6 each show an image of a multilayer film made of PE according to the invention with a respective arrangement of two gas-barrier layers in crossed parallel stripes.

### Detailed description

In the present description and in the appended claims, unless otherwise indicated, all numbers expressing quantities, percentages, contents, and the like must be intended as modified in all cases by the term "about". Moreover, all ranges include any combinations of the minimum and maximum ends described and include any intermediate range therein which may or may not be specifically numbered therein.

In the present description it must be intended that the technical features previously and hereinafter specified may be combined with each other in any way, constituting further embodiments of the present invention which are not specifically described for the sake of brevity, but which fall within the scope of the present invention.

In the present description, "gas-barrier properties" means the capacity of the discontinuous coating (or layer) comprising graphene and/or a derivative thereof to induce in the multilayer film having said coating a reduction in the gas permeability, in particular to oxygen, by at least 40%, preferably by at least 50%, in a more preferred extent by at least 70%, such as for instance at least 80% or at least 90%, with respect to the gas permeability, in particular to oxygen, of a corresponding multilayer film made of plastic material not coated with graphene and/or a derivative thereof, where the permeability of the multilayer film not coated with graphene and/or a derivative thereof and the permeability of the coated multilayer film are measured under equal experimental conditions of relative humidity and temperature.

In the embodiments hereinafter described with reference to the appended drawings, the elements that are structurally and/or functionally equivalent will be given the same reference numbers.

As previously noticed, the multilayer film according to the invention comprises a first layer and a second layer both made of plastic material, preferably thermoplastic, which per se does not have significative gas-barrier properties.

The material forming the first layer and the second layer may be any plastic material, preferably thermoplastic, suitable for the packaging of products in general, in particular food or pharmaceutic products. Preferably, the plastic material forming the first layer and the second layer is a plastic material that can be recycled with recycle techniques known in the art.

Preferred but non-limiting examples of plastic materials suitable for the first layer and the second layer of the multilayer film of the invention comprise polyethylene (PE), polypropylene (PP), and polyethylene terephthalate (PET). Said plastic materials may be used to form said first layer and/or said second layer in the virgin state or come from post-consumption recycling. Blends of virgin and recycled plastic materials are also provided for.

The thickness of the first layer and/or of the second layer made of plastic material is comprised in the range from 5 µm to 100 µm, in particular from 5 µm to 70 µm.

Preferably, the first layer and the second layer of the multilayer film of the invention are formed with the same plastic material.

According to an embodiment of the present invention, the first layer made of plastic material is coated with a gas-barrier layer comprising graphene and/or a derivative thereof formed in a discontinuous manner on the coupling surface of the first layer with the second layer made of plastic material.

In the present description, the term "graphene" indicates a material consisting of a monatomic layer of carbon atoms covalently bonded to each other to form a polycyclic aromatic molecule, where the carbon atoms bonded by the covalent bond form a 6-member ring as a base repeating unit, but it is also possible to further include a 5-member ring and/or a 7-member ring. Therefore, the sheet formed by graphene may be seen as a single layer of carbon atoms covalently bonded to each other, but not limited thereto. The sheet formed by graphene may have various structures, and this structure may vary depending on a content of the 5-member ring and/or of the 7-member ring that may be included in the graphene. Moreover, in case the sheet formed by graphene is formed by a single layer, the single layers may be stacked one upon each other so as to form a plurality of layers, and an end portion of a side surface of the graphene sheet may be saturated with hydrogen atoms.

Derivatives of graphene include graphene oxide (GO), reduced graphene oxide (rGO), graphene nanoparticles or nanoplatelets (GNP) and combinations thereof.

The graphene oxide, shortened as GO, indicates a material obtained by oxidation of graphite that allows introducing into the structure a functional group containing oxygen as a carboxyl group, a hydroxyl group, or an epoxy group bonded on the single-layer graphene. The presence of these functional groups makes the graphene oxide strongly hydrophilic and therefore easily dispersible in water.

The reduced graphene oxide, abbreviated as rGO, indicates a graphene oxide whose oxygen/carbon ratio is reduced through a reduction process.

The graphene nanoplatelets, abbreviated as GNP, indicates a material consisting of multiple overlapped sheets of graphene produced with a physical or chemical method from natural graphite.

In an embodiment, the gas-barrier layer formed in a discontinuous manner on the first layer made of plastic material comprises or consists of graphene, GO, rGO, GNP, or combinations thereof.

In an embodiment, the gas-barrier layer formed in a discontinuous manner on the first layer made of plastic material comprises or consists of GO.

The gas-barrier layer applied on the first layer made of plastic material may further comprise a clay, in particular at least one phyllosilicate and/or a hydrotalcite.

Non-limiting examples of phyllosilicates suitable for the gas-barrier layer include montmorillonite, cloisite, talc, mica, and combinations thereof.

In an embodiment, the gas-barrier layer comprises, in addition to graphene and/or a derivative thereof as above indicated, at least one phyllosilicate selected from montmorillonite and cloisite.

The thickness of the gas-barrier discontinuous layer may vary within wide limits so as to have the desired properties in the multilayer film and in the container obtained therewith, in particular as for the barrier to oxygen.

In an embodiment, the thickness of the gas-barrier layer of the first layer made of plastic material is comprised in the range from 0.01 µm to 1 µm, for instance from 0.05 µm to 0.5 µm.

A thickness lower than 0.01 µm may be insufficient to confer the multilayer film acceptable gas-barrier features, whereas a thickness greater than 1 µm may not bring significant benefits in terms of increase in gas-barrier properties and increases the production costs of the multilayer film of the invention.

The first gas-barrier discontinuous layer may have any desired shape, geometry and/or size, as well as any orientation with reference to the coupling surface of the first layer made of plastic material. By way of non-limiting example, the first gas-barrier discontinuous layer may be in the shape of parallel stripes that are (equally) spaced from each other and alternated to non-coated areas of the coupling surface of the first layer. The distance between the stripes of the gas-barrier discontinuous layer may be suitably selected so as to have a discontinuous covering of the coupling surface, preferably by at least 70%, suitable to maintain good gas-barrier properties. Alternatively, the first gas-barrier discontinuous layer may be applied onto the coupling surface of the first layer made of plastic material in dots of any desired shape, geometry and/or size.

The multilayer film according to the invention further comprises an adhesive layer interposed between the gas-barrier layer and the coupling surface of the second layer made of plastic material with the first layer made of plastic material.

The adhesive may be of any material known in the art and suitable to firmly join laminated films made of plastic material, for instance a polyurethane adhesive, an acrylic adhesive, a polyolefin adhesive, a thermoplastic adhesive, or other functionally equivalent adhesives.

In a preferred embodiment, the above adhesive is made of a polyurethane adhesive.

The adhesive may be water- or solvent-based or may be water and/or solvent free. Adhesives of this type are well known to those skilled in the art.

The thickness of the adhesive layer may vary within wide limits so as to have suitable adhesion properties between the first layer and the second layer made of plastic material of the multilayer film.

In an embodiment, the thickness of the adhesive layer is comprised in the range from 0.5 µm to 10 µm, for instance from 1 µm to 5 µm.

In the multilayer film according to the present embodiment, the first layer made of plastic material carrying the gas-barrier discontinuous coating layer and the second layer made of plastic material are joined to each other at the respective coupling surface through said adhesive layer, preferably by lamination. In this way, the gas-barrier discontinuous coating layer is interposed between the first layer and the second layer made of plastic material.

In another embodiment of the multilayer film according to the invention, the coupling surface of the second layer made of plastic material is coated in a discontinuous manner with a second gas-barrier layer as above described comprising graphene and/or a derivative thereof and optionally a clay, for instance at least one phyllosilicate such as montmorillonite and/or cloisite, and/or a hydrotalcite.

In this way, the adhesive layer having the above indicated features is interposed between the first gas-barrier discontinuous layer which coats the coupling surface of the first layer made of plastic material and the second gas-barrier layer which coats the coupling surface of the second layer made of plastic material in a discontinuous manner, and the first layer and the second layer made of plastic material are joined to each other at the respective coupling surfaces through said adhesive layer, preferably by lamination. In this way, the gas-barrier coating layers are interposed between the first layer and the second layer made of plastic material.

The Applicant found out that in the multilayer film according to the invention the adhesion strength between the layers made of plastic material is significantly increased thanks to the presence of at least one gas-barrier discontinuous layer between said layers, and this advantageously allows preventing the delamination of the structure. At the same time, surprisingly, the multilayer film according to the invention maintains proper gas-barrier properties, as it can be better appreciated in the experimental part reported further on in the present description, despite the presence of areas not coated with the gas-barrier layer on the coupling surface of at least one of said layers made of plastic material.

In particular, the multilayer film according to the invention has a very reduced gas permeability, in particular to oxygen, which is less than at least 50%, preferably than at least 70% with respect to gas permeability, in particular to oxygen, with respect to a corresponding multilayer film made of plastic material not coated with graphene and/or a derivative thereof, where the permeability of the multilayer film not coated with graphene and/or a derivative thereof and the permeability of the coated multilayer film are measured under equal experimental conditions of relative humidity and temperature.

The multilayer film according to the invention may comprise, in addition to the above-described layers, functional layers preferably made of plastic material. By way of non-limiting example, said further layers may be, for instance, a reinforcement layer to increase the mechanical properties of the multilayer film, a layer of thermoplastic material with heat sealing properties, etc.

As for the method of production of the multilayer film according to the invention, in a first step the first layer and the second layer made of plastic material are formed. This can be made by techniques which are per se conventional, for instance by extrusion or co-extrusion techniques from a proper flat head die of a sheet of plastic material starting from appropriate polymeric blends, as known in the art.

Subsequently, it is possible to provide for the formation of a first gas-barrier discontinuous coating layer on a coupling surface of the first layer made of plastic material and possibly for the formation of a second gas-barrier discontinuous coating layer on the coupling surface of the second layer made of plastic material.

This can be made in various manners, for instance by spraying or liquid-phase deposition starting from a suitable formulation comprising graphene and/or a derivative thereof or using other similar or functionally equivalent techniques known in the art.

The formulation or composition may be for instance in the form of a solution or dispersion of graphene and/or a derivative thereof in a suitable solvent, preferably water or an aqueous solvent. After the application of said composition, for instance by spraying, deposition, or similar means, the solvent is made to evaporate, for instance by drying in hot air, thus obtaining the formation of a gas-barrier discontinuous coating layer on the first layer and possibly on the second layer made of plastic material.

Before applying the composition based on graphene and/or a derivative thereof, the coupling surface of the first layer made of plastic material and, optionally, the coupling surface of the second layer made of plastic material may be optionally subjected to a treatment to improve the adhesion features of said layers with the composition subsequently applied. Said surface treatment may be carried out in various manners known in the art, for instance by a corona effect treatment, a plasma treatment, or a laser treatment.

Alternatively, on the coupling surface of the first layer made of plastic material and, optionally, on the coupling surface of the second layer made of plastic material a primer may be applied in advance, in a manner per se known in the art, able to improve the adhesion features of said layers with the composition based on graphene and/or a derivative thereof subsequently applied.

Afterwards an adhesive layer is applied onto the first discontinuous coating layer and/or on the coupling surface of the second layer made of plastic material or on the second coating layer, if present, and the first layer and the second layer made of plastic material are coupled at the respective coupling surfaces, so as to arrange the first discontinuous coating layer and the second discontinuous coating layer, if present, between said layers made of plastic material and mutually opposite each other.

The application of the adhesive may be carried out in various manners known by the person skilled in the art, for instance by spraying, liquid phase deposition, etc.

The coupling between the first layer and the second layer made of plastic material may be carried out in various manners, in particular by lamination between heated rollers.

The operations of formation of the gas-barrier coating layer or layers, of application of the adhesive and of lamination may be carried out in-line or off-line with the formation operation, for instance by extrusion, of the first layer and of the second layer made of plastic material, according to contingent and specific needs.

In the figures some non-limiting examples of multilayer films according to the invention are shown.

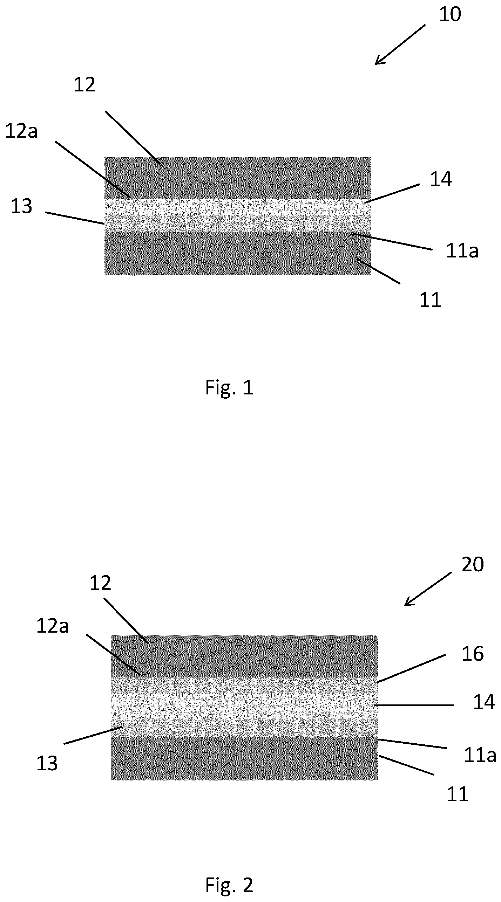

In particular, Figure 1 schematically shows in section a multilayer film according to a first embodiment of the invention, which is globally indicated with reference number 10.

The multilayer film 10 comprises a first layer (or lower layer) 11 and a second layer (or upper layer) 12, both made of plastic material, for instance PE or PP. The first layer 11 and the second layer 12 may be formed with a thickness comprised between 5 µm and 100 µm.

The multilayer film 10 further comprises a gas-barrier discontinuous coating layer 13 applied on an upper coupling surface 11a of the first layer 11 made of plastic material and an adhesive layer 14 interposed between the discontinuous coating layer 12 and a lower coupling surface 12a of the second layer 12.

The gas-barrier discontinuous coating layer 13 comprises graphene and/or a derivative thereof and optionally a phyllosilicate and/or a hydrotalcite and may have for instance a thickness comprised between 0.01 µm and 1 µm. In particular, the gas-barrier discontinuous coating layer 13 may be made of GO and a phyllosilicate, for instance montmorillonite or cloisite.

The adhesive layer 14 may be preferably based on a polyurethane adhesive and may have a thickness of between 0.5 µm and 10 µm.

The first layer 11 carrying the discontinuous carrying the discontinuous coating layer 13 and the second layer 12 are coupled to each other by the adhesive layer 14, in particular by lamination.

Figure 2 schematically shows in section a multilayer film according to a second embodiment of the invention, which is wholly indicated with reference number 20.

The multilayer film 20 differs from the previously described multilayer film 10 due to the fact of comprising a second gas-barrier discontinuous coating layer 16 applied on the lower coupling surface 12a of the second layer 12 made of plastic material and due to the fact that the adhesive layer 14 is interposed between the first gas-barrier discontinuous coating layer 13 and the second gas-barrier discontinuous coating layer 16.

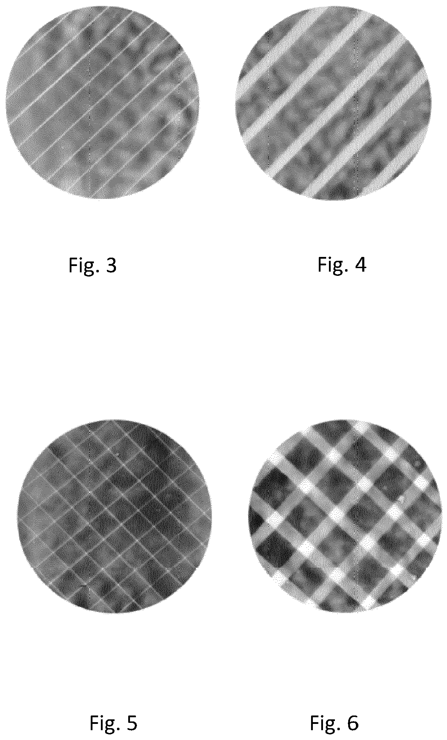

Figures 3 and 4 show respective examples of multilayer films 10 according to the invention, wherein the first gas-barrier discontinuous coating layer 13 is applied onto the first layer 11 made of thermoplastic material in the form of parallel stripes spaced apart from each other with lower distance (Figure 3) or greater distance (Figure 4).

Figures 5 and 6 show respective examples of multilayer films 20 according to the invention, wherein the first gas-barrier discontinuous coating layer 13 and the second discontinuous coating layer 16 are applied on the first layer 11 made of thermoplastic material and on the second layer 12 made of plastic material, respectively, in the form of first stripes parallel to each other and second stripes parallel to each other, the first and the second stripes being overlapped to each other and having a different orientation that is offset by 90° with respect to each other. The first stripes and the second stripes are spaced apart with lower distance (Figure 5) or greater distance (Figure 6). Obviously, in other embodiments, the orientation angle may also be any angle different from 90°.

### Experimental part

The examples are reference examples.

Films made of thermoplastic material (PE or PP) have been coated with a graphene oxide (GO)-based barrier layer or with a hybrid layer made of graphene oxide and montmorillonite (GO/MMT) in a discontinuous manner. In detail, two types of discontinuous coating thus characterized were used:
1) the films made of thermoplastic material are covered with a GO (PE film) or GO/MMT (PP film)-based barrier coating in parallel strips that are 8 mm thick at a distance of 0.5 mm from each other; this type of discontinuous coating is called D1;
2) the polymeric films are covered with a GO (PE film) or GO/MMT (PP film)-based barrier coating in parallel strips that are 11 mm thick at a distance of 4 mm from each other; this type of discontinuous coating is called D2.

The coated films made of thermoplastic material were then laminated so as to form multilayer films according to the invention.

Lamination was carried out using the following configurations:
1) a film made of PE or PP with D1 coating was laminated together with a similar film made of PE or PP without coating by using polyurethane adhesive; the resulting laminates according to the invention are named PE-D1 or PP-D1;
2) a film made of PE or PP with D2 coating was laminated together with a similar film made of PE or PP without coating by using polyurethane adhesive; the resulting laminates according to the invention are named PE-D2 or PP-D2;
3) a film made of PE or PP with D1 coating was laminated together with a film made of PE or PP with D1 coating oriented by 90° with respect to the first one; the resulting laminates according to the invention are named PE-2D1 or PP-2D1;
4) a film made of PE or PP with D2 coating has been laminated together with a film made of PE or PP with D2 coating oriented by 90° with respect to the first one; the resulting laminates according to the invention are named PE-2D2 or PP-2D2.

Oxygen permeability tests (50% RH, 25°C) were carried out to evaluate the oxygen barrier effect of the multilayer films (laminates) obtained as above.

As a reference for the laminates made of PE, a multilayer film consisting of two uncoated films made of PE laminated by polyurethane adhesive (PE) and a multilayer film made of PE consisting of two films made of PE, one of which treated with a GO-based continuous coating, laminated by polyurethane adhesive (PE GO).

As a reference for the laminates made of PP, a multilayer film consisting of two uncoated films made of PP laminated by polyurethane adhesive (PP) and a multilayer film made of PP consisting of two films made of PP, one of which is treated with a GO/MMT-based continuous coating, laminated by polyurethane adhesive (PP GO/MMT).

The results are reported in the following Table 1 for the laminates made of PE and in the following Table 2 for the laminates made of PP.

**Table 1**

| Film | Thickness (µm) | Permeability to oxygen (barrer) (50% RH, 25°C) | Areas without coating on at least one layer (%) | Areas without any coating (%) |
|---|---|---|---|---|
| PE | 222.0 | 0.994 | 100 | 100 |
| PE GO | 228.6 | 0.085 | 0 | 0 |
| PE-D 1 | 216.7 | 0.094 | 5.88 | 5.88 |
| PE-2D1 | 223.0 | 0.024 | 11.42 | 0.34 |
| PE-D2 | 223.6 | 0.224 | 26.67 | 26.67 |
| PE-2D2 | 232.2 | 0.125 | 46.23 | 7.11 |

From the results in Table 1 it can be seen that multilayer films made of PE with a discontinuous GO-based coating having a smaller spacing between the strips (PE-D1, PE-2D1) have a barrier effect (reduced permeability) which is comparable or better for the laminates with double coating (PE-2D1) with respect to the reference represented by the film made of PE with a single continuous GO-based (PE GO) coating. The multilayer films made of PE with discontinuous coating having greater spacing between the strips (PE-D2, PE-2D2), on the other hand, have a greater permeability than the reference (PE GO) but in any case much lower than the uncoated film made of PE. The gas barrier properties of said multilayer films made of PE-D2 and PE-2D2 are in any case good and suitable for the use of said multilayer films for the production of gas-barrier containers/packages.

**Table 2**

| Film | Thickness (µm) | Permeability to oxygen (barrer) (50% RH, 25°C) | Areas without coating on at least one layer (%) | Areas without any coating (%) |
|---|---|---|---|---|
| PP | 181.4 | 0.689 | 100 | 100 |
| PP GO/MMT | 171.3 | 0.059 | 0 | 0 |
| PP-D 1 | 231.1 | 0.100 | 5.88 | 5.88 |
| PP-2D1 | 194.6 | 0.011 | 11.42 | 0.34 |
| PP-D2 | 244.0 | 0.290 | 26.67 | 26.67 |
| PP-2D2 | 230.0 | 0.089 | 46.23 | 7.11 |

From the results in Table 2 it can be seen, similarly, that multilayer films made of PP with a GO/MMT-based discontinuous coating having a smaller spacing between the strips (PP-D1, PP-2D1) show a barrier effect (reduced permeability) which is comparable or better for laminates with double coating (PP-2D1) than the reference represented by the film made of PP with a GO/MMT (PP GO/MMT)-based single continuous coating. The films made of PP with discontinuous coating having greater spacing between the strips (PP-D2, PP-2D2), on the other hand, have a greater permeability than the reference (PP GO/MMT) but in any case much lower than the uncoated film made of PP.

The gas-barrier properties of said multilayer films made of PP-D2 and PP-2D2 are in any case good and suitable for the use of said multilayer films for the production of gas-barrier containers/packages.

All of the multilayer films made of PE and PP according to the invention mentioned above did not show any delamination of the structure, thus confirming the presence of a high adhesion strength between the layers of plastic materials of said films.

## Claims

1. A multilayer film (10; 20) having gas-barrier properties comprising a first layer (11) and a second layer (12) made of a plastic material coupled to each other and at least one layer (13, 16) having gas-barrier properties between said first layer (11) and said second layer (12) wherein the at least one layer (13, 16) having gas-barrier properties comprises graphene and/or a derivative thereof and coats a coupling surface (11a, 12a) of at least one of the first layer (11) and the second layer (12) in a discontinuous manner and wherein said first layer (11) and said second layer (12) made of plastic material have each a thickness comprised in the range from 5 µm to 100 µm.

2. The multilayer film (10; 20) according to claim 1, wherein said at least one discontinuous layer (13, 16) having gas-barrier properties coats at least 70% of the coupling surface (11a, 12a) of at least one of said first layer (11) and said second layer (12), preferably between 70% and 99.8%, in particular between 90% and 99.8% of the coupling surface (11a, 12a) of at least one of said first layer (11) and said second layer (12).

3. The multilayer film (10; 20) according to claim 1 or 2, wherein said graphene derivative is selected from graphene oxide (GO), reduced graphene oxide (rGO), graphene nanoplatelets (GNP) and combinations thereof, and is preferably GO.

4. The multilayer film (10; 20) according to any one of the preceding claims, wherein said at least one discontinuous layer (13, 16) having gas-barrier properties comprises graphene and/or a derivative thereof and at least one phyllosilicate and/or a hydrotalcite.

5. The multilayer film (10; 20) according to claim 4, wherein said at least one phyllosilicate is selected from montmorillonite, cloisite, talc, mica, and combinations thereof and is preferably montmorillonite or cloisite.

6. The multilayer film (10; 20) according to any one of the preceding claims, wherein said first layer (11) and said second layer (12) are made of a plastic material selected from polyethylene (PE), polypropylene (PP), and polyethylene terephthalate (PET).

7. The multilayer film (10; 20) according to any one of the preceding claims, wherein said at least one discontinuous layer (13, 16) having gas-barrier properties has a thickness comprised in the range from 0.01 µm to 1 µm.

8. The multilayer film (10; 20) according to any one of the preceding claims, wherein said first layer (11) and said second layer (12) made of a plastic material are coupled by an adhesive layer.

9. The multilayer film (10; 20) according to claim 8, wherein said adhesive layer has a thickness comprised in the range from 0.5 µm to 10 µm and said adhesive is selected from a polyurethane adhesive, an acrylic adhesive, a polyolefin adhesive, and a thermoplastic adhesive.

10. The multilayer film (10) according to any one of the preceding claims, comprising a first gas-barrier layer (13) comprising graphene and/or a derivative thereof which coats the coupling surface (11a) of said first layer (11) in a discontinuous manner and an adhesive (14) placed between said first discontinuous gas-barrier layer (13) and said second layer (12) made of plastic material, said first layer (11) made of plastic material carrying said gas-barrier layer (13) of discontinuous coating and said second layer (12) made of plastic material being coupled to each other by said adhesive (14).

11. The multilayer film (20) according to any one of claims 1 to 9, comprising a first gas-barrier layer (13) comprising graphene and/or a derivative thereof which coats the coupling surface (11a) of said first layer (11) made of plastic material in a discontinuous manner, a second gas-barrier layer (16) comprising graphene and/or a derivative thereof which coats the coupling surface (12a) of said second layer (12) made of plastic material in a discontinuous manner and an adhesive (14) placed between said first gas-barrier layer (13) and said second gas-barrier layer (16), said first layer (11) made of plastic material carrying said first gas-barrier layer (13) of discontinuous coating and said second layer (12) made of plastic material carrying said second gas-barrier layer (16) of coating being coupled to each other by said adhesive.

12. A method for producing a multilayer film (10; 20) according to any one of the preceding claims, the method comprising the steps of:
- forming a first layer (11) and a second layer (12) made of plastic material,
- forming a first gas-barrier layer (13) of discontinuous coating on a coupling surface (11a) of said first layer (11) made of plastic material, said first layer (13) of discontinuous coating comprising graphene and/or a derivative thereof and optionally at least one phyllosilicate and/or a hydrotalcite;
- optionally forming a second gas-barrier layer (16) of discontinuous coating on a coupling surface (12a) of said second layer (11) made of plastic material, said second layer (16) of discontinuous coating comprising graphene and/or a derivative thereof and optionally at least one phyllosilicate and/or a hydrotalcite;
- coupling said first layer (11) made of plastic material carrying said first layer (13) of discontinuous coating with said second layer (12) made of plastic material possibly carrying said second layer (16) of discontinuous coating so as to arrange said first layer (13) of discontinuous coating and said second layer (16) of discontinuous coating, if present, between said first layer (11) and said second layer (12) made of plastic material.

13. The method according to claim 12, wherein said step of forming said first gas-barrier layer (13) of discontinuous coating on the coupling surface (11a) of said first layer (11) made of plastic material and/or said step of forming said second gas-barrier layer (16) of discontinuous coating on the coupling surface (12a) of said second layer (12) made of plastic material is performed by spraying or deposition starting from a suitable composition comprising graphene and/or a derivative thereof and optionally a phyllosilicate and/or a hydrotalcite.

14. The method according to claim 12 or 13, wherein said step of coupling said first layer (11) made of plastic material carrying said first layer (13) of discontinuous coating with said second layer (12) made of plastic material possibly carrying said second layer (16) of discontinuous coating comprises:
- applying an adhesive layer (14) onto said first layer (13) of discontinuous coating and/or onto the coupling surface (12a) of said second layer (12) made of plastic material or on said second layer (16) of discontinuous coating if present, and
- laminating said first layer (11) made of plastic material with said second layer (12) made of plastic material.

15. A container or a package comprising a multilayer film according to any one of claims 1 to 11.

## Patentansprüche

1. Mehrschichtiger Film (10; 20) mit Gasbarriereeigenschaften, umfassend eine erste Schicht (11) und eine zweite Schicht (12) aus einem Kunststoffmaterial, die miteinander gekoppelt sind, und mindestens eine Schicht (13, 16) mit Gasbarriereeigenschaften zwischen der ersten Schicht (11) und der zweiten Schicht (12), wobei die mindestens eine Schicht (13, 16) mit Gasbarriereeigenschaften Graphen und/oder ein Derivat dessen umfasst und eine Kopplungsfläche (11a, 12a) von mindestens einer der ersten Schicht (11) und der zweiten Schicht (12) in einer diskontinuierlichen Weise beschichtet und wobei die erste Schicht (11) und die zweite Schicht (12) aus Kunststoffmaterial jeweils eine Dicke im Bereich von 5 µm bis 100 µm aufweisen.

2. Mehrschichtiger Film (10; 20) nach Anspruch 1, wobei die mindestens eine diskontinuierliche Schicht (13, 16) mit Gasbarriereeigenschaften mindestens 70 % der Kopplungsfläche (11a, 12a) der mindestens einen der ersten Schicht (11) und der zweiten Schicht (12), vorzugsweise zwischen 70 % und 99,8 %, insbesondere zwischen 90 % und 99,8 % der Kopplungsfläche (11a, 12a) der mindestens einen der ersten Schicht (11) und der zweiten Schicht (12), beschichtet.

3. Mehrschichtiger Film (10; 20) nach Anspruch 1 oder 2, wobei das Graphenderivat aus Graphenoxid (GO), reduziertem Graphenoxid (rGO), Graphennanoplättchen (GNP) und Kombinationen dieser ausgewählt ist und vorzugsweise GO ist.

4. Mehrschichtiger Film (10; 20) nach einem der vorhergehenden Ansprüche, wobei die mindestens eine diskontinuierliche Schicht (13, 16) mit Gasbarriereeigenschaften Graphen und/oder ein Derivat dessen und mindestens ein Phyllosilikat und/oder einen Hydrotalkit umfasst.

5. Mehrschichtiger Film (10; 20) nach Anspruch 4, wobei das mindestens eine Phyllosilikat aus Montmorillonit, Cloisite, Talk, Glimmer und Kombinationen dieser ausgewählt ist und vorzugsweise Montmorillonit oder Cloisite ist.

6. Mehrschichtiger Film (10; 20) nach einem der vorhergehenden Ansprüche, wobei die besagte erste Schicht (11) und die besagte zweite Schicht (12) aus einem Kunststoffmaterial ausgebildet sind, das aus Polyethylen (PE), Polypropylen (PP) und Polyethylenterephthalat (PET) ausgewählt ist.

7. Mehrschichtiger Film (10; 20) nach einem der vorhergehenden Ansprüche, wobei die besagte mindestens eine diskontinuierliche Schicht (13, 16) mit Gasbarriereeigenschaften eine Dicke im Bereich von 0,01 µm bis 1 µm aufweist.

8. Mehrschichtiger Film (10; 20) nach einem der vorhergehenden Ansprüche, wobei die besagte erste Schicht (11) und die besagte zweite Schicht (12) aus einem Kunststoffmaterial durch eine Klebstoffschicht verbunden sind.

9. Mehrschichtiger Film (10; 20) nach Anspruch 8, wobei die besagte Klebstoffschicht eine Dicke im Bereich von 0,5 µm bis 10 µm aufweist und der besagte Klebstoff aus einem Polyurethanklebstoff, einem Acrylklebstoff, einem Polyolefinklebstoff und einem thermoplastischen Klebstoff ausgewählt ist.

10. Mehrschichtiger Film (10) nach einem der vorhergehenden Ansprüche, umfassend eine erste Gasbarriereschicht (13), die Graphen und/oder ein Derivat dessen umfasst, die die Kopplungsfläche (11a) der besagten ersten Schicht (11) in einer diskontinuierlichen Weise beschichtet, und einen Klebstoff (14), der zwischen der besagten ersten diskontinuierlichen Gasbarriereschicht (13) und der besagten zweiten Schicht (12) aus Kunststoffmaterial angeordnet ist, wobei die besagte erste Schicht (11) aus Kunststoffmaterial die besagte Gasbarriereschicht (13) mit diskontinuierlicher Beschichtung trägt und die besagte zweite Schicht (12) aus Kunststoffmaterial durch den besagten Klebstoff (14) miteinander verbunden sind.

11. Mehrschichtiger Film (20) nach einem der Ansprüche 1 bis 9, umfassend eine erste Gasbarriereschicht (13), die Graphen und/oder ein Derivat dessen umfasst, die die Kopplungsfläche (11a) der besagten ersten Schicht (11) aus Kunststoffmaterial in einer diskontinuierlichen Weise beschichtet, eine zweite Gasbarriereschicht (16), die Graphen und/oder ein Derivat dessen umfasst, die die Kopplungsfläche (12a) der besagten zweiten Schicht (12) aus Kunststoffmaterial in einer diskontinuierlichen Weise beschichtet, und einen Klebstoff (14), der zwischen der besagten ersten Gasbarriereschicht (13) und der besagten zweiten Gasbarriereschicht (16) angeordnet ist, wobei die besagte erste Schicht (11) aus Kunststoffmaterial die besagte erste Gasbarriereschicht (13) mit diskontinuierlicher Beschichtung trägt und die besagte zweite Schicht (12) aus Kunststoffmaterial, die die besagte zweite Gasbarriereschicht (16) als Beschichtung trägt, durch den besagten Klebstoff miteinander verbunden sind.

12. Verfahren zur Herstellung eines mehrschichtigen Films (10; 20) nach einem der vorhergehenden Ansprüche, wobei das Verfahren die folgenden Schritte umfasst:
- Bilden einer ersten Schicht (11) und einer zweiten Schicht (12) aus Kunststoffmaterial,
- Bilden einer ersten Gasbarriereschicht (13) mit diskontinuierlicher Beschichtung auf einer Kopplungsfläche (11a) der besagten ersten Schicht (11) aus Kunststoffmaterial, wobei die besagte erste Schicht (13) mit diskontinuierlicher Beschichtung Graphen und/oder ein Derivat dessen und optional mindestens ein Phyllosilikat und/oder einen Hydrotalkit umfasst;
- optionales Bilden einer zweiten Gasbarriereschicht (16) mit diskontinuierlicher Beschichtung auf einer Kopplungsfläche (12a) der besagten zweiten Schicht (11) aus Kunststoffmaterial, wobei die besagte zweite Schicht (16) mit diskontinuierlicher Beschichtung Graphen und/oder ein Derivat dessen und optional mindestens ein Phyllosilikat und/oder einen Hydrotalkit umfasst;
- Koppeln der besagten ersten Schicht (11) aus Kunststoffmaterial, die die besagte erste Schicht (13) mit diskontinuierlicher Beschichtung trägt, mit der besagten zweiten Schicht (12) aus Kunststoffmaterial, die möglicherweise die besagte zweite Schicht (16) mit diskontinuierlicher Beschichtung trägt, um die besagte erste Schicht (13) mit diskontinuierlicher Beschichtung und die besagte zweite Schicht (16) mit diskontinuierlicher Beschichtung, falls vorhanden, zwischen der besagten ersten Schicht (11) und der besagten zweiten Schicht (12) aus Kunststoffmaterial anzuordnen.

13. Verfahren nach Anspruch 12, wobei der besagte Schritt des Bildens der besagten ersten Gasbarriereschicht (13) mit diskontinuierlicher Beschichtung auf der Kopplungsfläche (11a) der besagten ersten Schicht (11) aus Kunststoffmaterial und/oder der besagte Schritt des Bildens der besagten zweiten Gasbarriereschicht (16) mit diskontinuierlicher Beschichtung auf der Kopplungsfläche (12a) der besagten zweiten Schicht (12) aus Kunststoffmaterial durch Sprühen oder Abscheiden ausgehend von einer geeigneten Zusammensetzung, die Graphen und/oder ein Derivat dessen und optional ein Phyllosilikat und/oder einen Hydrotalkit umfasst, durchgeführt wird.

14. Verfahren nach Anspruch 12 oder 13, wobei der besagte Schritt des Koppelns der besagten ersten Schicht (11) aus Kunststoffmaterial, die die besagte erste Schicht (13) mit diskontinuierlicher Beschichtung trägt, mit der besagten zweiten Schicht (12) aus Kunststoffmaterial, die möglicherweise die besagte zweite Schicht (16) mit diskontinuierlicher Beschichtung trägt, Folgendes umfasst:
- Aufbringen einer Klebstoffschicht (14) auf die besagte erste Schicht (13) mit diskontinuierlicher Beschichtung und/oder auf die Kopplungsfläche (12a) der besagten zweiten Schicht (12) aus Kunststoffmaterial oder auf die besagte zweite Schicht (16) mit diskontinuierlicher Beschichtung, falls vorhanden, und
- Laminieren der besagten ersten Schicht (11) aus Kunststoffmaterial mit der besagten zweiten Schicht (12) aus Kunststoffmaterial.

15. Behälter oder Verpackung, umfassend einen mehrschichtigen Film nach einem der Ansprüche 1 bis 11.

## Revendications

1. Film multicouche (10 ; 20) présentant des propriétés d'étanchéité aux gaz comprenant une première couche (11) et une seconde couche (12) réalisées en une matière plastique et couplées entre elles, et au moins une couche (13, 16) présentant des propriétés d'étanchéité aux gaz entre ladite première couche (11) et ladite seconde couche (12), dans lequel la au moins une couche (13, 16) présentant des propriétés d'étanchéité aux gaz comprend du graphène et/ou un dérivé de celui-ci et recouvre une surface de couplage (11a, 12a) d'au moins l'une de la première couche (11) et de la seconde couche (12) d'une manière discontinue et dans lequel ladite première couche (11) et ladite seconde couche (12) réalisées en une matière plastique présentent chacune une épaisseur comprise dans la plage de 5 µm à 100 µm.

2. Film multicouche (10 ; 20) selon la revendication 1, dans lequel ladite au moins une couche discontinue (13, 16) présentant des propriétés d'étanchéité aux gaz recouvre au moins 70 % de la surface de couplage (11a, 12a) d'au moins l'une de ladite première couche (11) et de ladite seconde couche (12), de préférence, entre 70 % et 99,8 % et plus particulièrement, entre 90 % et 99,8 % de la surface de couplage (11a, 12a) d'au moins l'une de ladite première couche (11) et de ladite seconde couche (12).

3. Film multicouche (10 ; 20) selon la revendication 1 ou 2, dans lequel ledit dérivé de graphène est sélectionné à partir de l'oxyde de graphène (GO), de l'oxyde de graphène réduit (rGO), de nanoplaquettes de graphène (GNP) et de combinaisons de ces derniers et, de préférence, est de l'oxyde GO.

4. Film multicouche (10 ; 20) selon l'une quelconque des revendications précédentes, dans lequel ladite au moins une couche discontinue (13, 16) présentant des propriétés d'étanchéité aux gaz comprend du graphène et/ou un dérivé de celui-ci et au moins un phyllosilicate et/ou une hydrotalcite.

5. Film multicouche (10 ; 20) selon la revendication 4, dans lequel ledit au moins un phyllosilicate est sélectionné à partir de la montmorillonite, de la cloisite, du talc, du mica et de combinaisons de ces derniers et est, de préférence, de la montmorillonite ou de la cloisite.

6. Film multicouche (10 ; 20) selon l'une quelconque des revendications précédentes, dans lequel ladite première couche (11) et ladite seconde couche (12) sont réalisées en une matière plastique sélectionnée à partir du polyéthylène (PE), du polypropylène (PP) et du polyéthylène téréphtalate (PET).

7. Film multicouche (10 ; 20) selon l'une quelconque des revendications précédentes, dans lequel ladite au moins une couche discontinue (13, 16) présentant des propriétés d'étanchéité aux gaz présente une épaisseur comprise dans la plage de 0,01 µm à 1 µm.

8. Film multicouche (10 ; 20) selon l'une quelconque des revendications précédentes, dans lequel ladite première couche (11) et ladite seconde couche (12) réalisées en une matière plastique sont couplées par une couche adhésive.

9. Film multicouche (10 ; 20) selon la revendication 8, dans lequel ladite couche adhésive présente une épaisseur comprise dans la plage de 0,5 µm à 10 µm et ledit adhésif est sélectionné à partir d'un adhésif à base de polyuréthane, d'un adhésif acrylique, d'un adhésif à base de polyoléfine et d'un adhésif thermoplastique.

10. Film multicouche (10) selon l'une quelconque des revendications précédentes, comprenant une première couche étanche aux gaz (13) comprenant du graphène et/ou un dérivé de celui-ci qui recouvre la surface de couplage (11a) de ladite première couche (11) d'une manière discontinue et un adhésif (14) placé entre ladite première couche étanche aux gaz discontinue (13) et ladite seconde couche (12) réalisée en une matière plastique, ladite première couche (11) réalisée en une matière plastique supportant ladite couche étanche aux gaz (13) de revêtement discontinu et ladite seconde couche (12) réalisée en une matière plastique étant couplées l'une à l'autre au moyen dudit adhésif (14).

11. Film multicouche (20) selon l'une quelconque des revendications 1 à 9, comprenant une première couche étanche aux gaz (13) comprenant du graphène et/ou un dérivé de celui-ci qui recouvre la surface de couplage (11a) de ladite première couche (11) réalisée en une matière plastique d'une manière discontinue, une seconde couche étanche aux gaz (16) comprenant du graphène et/ou un dérivé de celui-ci qui recouvre la surface de couplage (12a) de ladite seconde couche (12) réalisée en une matière plastique d'une manière discontinue et un adhésif (14) placé entre ladite première couche étanche aux gaz (13) et ladite seconde couche étanche aux gaz (16), ladite première couche (11) réalisée en une matière plastique supportant ladite première couche étanche aux gaz (13) de revêtement discontinu et ladite seconde couche (12) réalisée en une matière plastique supportant ladite seconde couche étanche aux gaz (16) de revêtement étant couplées l'une à l'autre au moyen dudit adhésif.

12. Procédé de production d'un film multicouche (10 ; 20) selon l'une quelconque des revendications précédentes, le procédé comprenant les étapes de :
formation d'une première couche (11) et d'une seconde couche (12) réalisées en une matière plastique,
formation d'une première couche étanche aux gaz (13) de revêtement discontinu sur une surface de couplage (11a) de ladite première couche (11) réalisée en une matière plastique, ladite première couche (13) de revêtement discontinu comprenant du graphène et/ou un dérivé de celui-ci et, en variante, au moins l'un d'un phyllosilicate et/ou d'une hydrotalcite ;
en variante, formation d'une seconde couche étanche aux gaz (16) de revêtement discontinu sur une surface de couplage (12a) de ladite seconde couche (11) réalisée en une matière plastique, ladite seconde couche (16) de revêtement discontinu comprenant du graphène et/ou un dérivé de celui-ci et, en variante, au moins l'un d'un phyllosilicate et/ou d'une hydrotalcite ;
le couplage de ladite première couche (11) réalisée en une matière plastique supportant ladite première couche (13) de revêtement discontinu avec ladite seconde couche (12) réalisée en une matière plastique supportant éventuellement ladite seconde couche (16) de revêtement discontinu de manière à agencer ladite première couche (13) de revêtement discontinu et ladite seconde couche (16) de revêtement discontinu, si présente, entre ladite première couche (11) et ladite seconde couche (12) réalisées en une matière plastique.

13. Procédé selon la revendication 12, dans lequel ladite étape de formation de ladite première couche étanche aux gaz (13) de revêtement discontinu sur la surface de couplage (11a) de ladite première couche (11) réalisée en une matière plastique et/ou ladite étape de formation de ladite seconde couche étanche aux gaz (16) de revêtement discontinu sur la surface de couplage (12a) de ladite seconde couche (12) réalisée en une matière plastique sont exécutées par pulvérisation ou dépôt à partir d'une composition appropriée comprenant du graphène et/ou un dérivé de celui-ci et, en variante, un phyllosilicate et/ou une hydrotalcite.

14. Procédé selon la revendication 12 ou 13, dans lequel ladite étape de couplage de ladite première couche (11) réalisée en une matière plastique supportant ladite première couche (13) de revêtement discontinu avec ladite seconde couche (12) réalisée en une matière plastique supportant éventuellement ladite seconde couche (16) de revêtement discontinu comprend :
l'application d'une couche adhésive (14) sur ladite première couche (13) de revêtement discontinu et/ou sur la surface de couplage (12a) de ladite seconde couche (12) réalisée en une matière plastique ou sur ladite seconde couche (16) de revêtement discontinu si présente, et
l'agencement en couche de ladite première couche (11) réalisée en une matière plastique avec ladite seconde couche (12) réalisée en une matière plastique.

15. Conteneur ou emballage comprenant un film multicouche selon l'une quelconque des revendications 1 à 11.
